# EUROPEAN PATENT SPECIFICATION

(11) **EP 1 023 839 B1**
(45) Date of publication and mention of the grant of the patent: **21.08.2002**
(21) Application number: 99830015.6
(22) Date of filing: 19.01.1999
(51) Int. Cl.: A21D 13/08

(54) **A salty oven base for cream slice**
Ein Teig mit Salz und daraus hergestellte gefüllte Backware
Pâte salée pour gâteaux fourrés

(43) Date of publication of application: 02.08.2000
(73) Proprietor: Foodinvest Group S.r.l., 64020 Teramo (IT)
(72) Inventor: Malavolta, Aristide Romano, 64020 Bellante Stazione (Teramo) (IT); Maiorano, Antonio, 00144 Rome (IT)
(74) Representative: Cioncoloni, Giuliana, Dr.

(56) References cited:
- EP-A- 0 688 503
- EP-A- 0 908 102
- DE-C- 19 648 506
- FR-A- 2 205 807
- FR-A- 2 405 651
- FR-A- 2 751 846
- GB-A- 2 194 126
- US-A- 5 374 438

## Description

This invention relates to the field of foodstoofs.

More specifically, it relates to an oven base particularly for slices, by the term of "slice" meaning that type of foodstuff made up of two slices of sponge cake containing a cream stuffing therebetween.

Traditionally slices are sweet foodstuffs. In particular, the oven bases that contain the stuffing cream are sweet.

The object of this invention is to provide, on the contrary, an oven base for slices that is of a salty kind, wherewhich to provide sandwhiches to be stuffed with a cream correspondingly preferably of a salty kind.

Such a cream is disclosed and claimed in a copending Italian patent application having the title "Crema di farcitura per trancini salati" in the name of the same Applicant hereof.

Such an object is reached, according to the teaching of this invention, by substituting a part of the sugar component with a salty component in the composition of an oven base manufactured according to the technology of the sponge cake.

Therefore, it is the subject of this invention an oven base composition of the kind of the sponge cake, comprising flour, eggs and sugar, further including some salt in substitution for a part of said sugar, for cream slices.

It is, moreover, the subject of this invention an oven base composition of the kind of the sponge cake as set forth, further comprising flavouring agents.

Such an oven base composition of the kind of the sponge cake comprising flavouring agents has the following formulation:

| | |
|---|---|
| Flour | 20 - 35% |
| Integral flour | 5 - 10% |
| Starch | 2 - 10% |
| Eggs | 20 - 35% |
| Salt | 1 - 2% |
| Glucose syrup | 0.5 - 10% |
| Peanut oil | 5 - 10% |
| Sweet herbs | 0.2 - 5% |
| Leavening agents | 0.2 - 1% |
| Emulsifying agents | 0.2 - 2% |
| Coadjuvants | 0.2 - 2% |

the percentages being all expressed by weight.

Finally, it is the subject of this invention a slice comprising the oven base of the kind of the sponge cake having the composition as set forth above.

This invention is advantageous in connection with the fact that a palatable product can be provided therewith having a salty taste, still unknown in the technology of marketable goods at the present day.

This invention will be best understood based on the following not restrictive example.

A batter for a sponge cake is cold prepared comprising flour, eggs and glucose syrup by substituting a part of the glucose syrup and adding sweet herbs according to the following formulation:

| | |
|---|---|
| Flour | 20 - 35% |
| Integral flour | 5 - 10% |
| Starch | 2 - 10% |
| Eggs | 20 - 35% |
| Salt | 1 - 2% |
| Glucose syrup | 0.5 - 10% |
| Peanut oil | 5 - 10% |
| Sweet herbs | 0.2 - 5% |
| Leavening agents | 0.2 - 1% |
| Emulsifying agents | 0.2 - 2% |
| Coadjuvants | 0.2 - 2% |

the percentages being all expressed by weight.

Such a hatter feeds a continuous belt having a variable thickness of 5 to 15 mm. This belt after the entry into an oven is cooled and consolidated up to T = +25 °C, longitudinally cut into parallel strips having a width variable from 25 to 65 mm: on the so resulting strips having an even order (2, 4, 6, 8 ...) a cream is extruded - particularly a not sweet cream according to the copending application for a patent for industrial invention in the name of the same Applicant hereof, cited above - coming from a continuous emulsifier pipe; the strips having an odd order number (1, 3, 5, 7 ...) are, with suitable guides, overlapped to the even ones so as to obtain continuous and parallel sandwiches that pass in a cooling tunnel that allows the cream to harden passing from 20-25 °C to 5-10 °C in a time of permanency in the tunnel that varies from 1 to 5 minutes; the continuous strips so hardened are cut transversely with a pitch variable from 80 to 120 mm; the sandwiches are in this way supported made up of two layers of oven base and an intermediate stuffing of anyhow characterized cream.

The slices are enveloped in a film and subsequently grouped in packages of a circular or rectangular kind, with a number of pieces suitable for the market share which they are intended to.

This invention has been set forth with reference to a specific example, but it is to be expressely understood that additions, variations and/or omissions can be made, without so departing from the scope of protection thereof, as defined by the appended claims.

## Claims

1. An oven base composition of the kind of the sponge cake suitable for cream slices, comprising flour, eggs and sugar, and further flavouring agents, in which composition some salt replaces a part of said sugar, for an oven base manufactured according to the technology of the sponge cake, **characterized by** the formulation:
| | |
|---|---|
| Flour | 20 - 35% |
| Integral flour | 5 - 10% |
| Starch | 2 - 10% |
| Eggs | 20 - 35% |
| Salt | 1 - 2% |
| Glucose syrup | 0.5 - 10% |
| Peanut oil | 5 - 10% |
| Sweet herbs | 0.2 - 5% |
| Leavening agents | 0.2 - 1% |
| Emulsifying agents | 0.2 - 2% |
| Coadjuvants | 0.2 - 2% |
the percentage being all expressed by weight.

2. A cream slice comprising the oven base of the kind of the sponge cake having the composition as claimed in Claim 1.

## Patentansprüche

1. Eine Sandkuchenteigzusammensetzung für Cremeschnitten bestehend aus Mehl, Eiern und Zucker sowie Aromastoffen, wobei der angeführte Zuckeranteil teilweise durch Salz ersetzt wird, für ein Sandkuchen-Ofenprodukt mit folgender Zusammensetzung:
| | |
|---|---|
| Mehl | 20 - 35% |
| Vollkornmehl | 5 - 10% |
| Stärke | 2 - 10% |
| Eier | 20 - 35% |
| Salz | 1 - 2% |
| Glukosesirup | 0,5 - 10% |
| Erdnussöl | 5 - 10% |
| Küchenkraut | 0,2 - 5% |
| Hefe | 0,2 - 1% |
| Emulgator | 0,2 - 2% |
| Backpulver | 0,2 - 2% |
wobei die o. a. Prozentangaben Gewichtsanteilen entsprechen.

2. Eine Cremeschnitte, welche das Sandkuchen-Ofenprodukt mit der unter Anspruch 1 angeführten Zusammensetzung enthält.

## Revendications

1. Composition pour base allant au four, d'une texture similaire au gâteau éponge, sur laquelle peuvent être ajoutées des couches de crème, composée de farine, d'oeufs et de sucre, ainsi que tout autre agent aromatisant, dont les ingrédients contiennent du sel à la place d'une partie du sucre, pour une base allant au four, produite selon une technique similaire à celle du gâteau éponge et **caractérisée par** la formule suivante :
| | |
|---|---|
| Farine | 20 - 35% |
| Farine intégrale | 5 - 10 % |
| Amidon | 2 - 10% |
| OEufs | 20 - 35% |
| Sel | 1 - 2% |
| Sirop de glucose | 0,5 - 10 % |
| Huile d'arachide | 5 - 10 % |
| Herbes douces | 0,2 - 5 % |
| Levain | 0,2 - 1 % |
| Emulsifiant | 0,2 - 2 % |
| Co-adjuvant | 0,2 - 2 % |
Les pourcentages sont tous exprimés par poids.

2. Une crème comprenant la base allant au four, de texture similaire au gâteau éponge, dont la composition est indiquée à la description 1.
